(19) Europäisches Patentamt
European Patent Office
Office européen des brevets

(11) **EP 3 553 867 A1**

(12) **EUROPÄISCHE PATENTANMELDUNG**

(43) Veröffentlichungstag:
16.10.2019  Patentblatt 2019/42

(51) Int Cl.:
*H01M 10/052* (2010.01)  *H01M 10/0562* (2010.01)
*H01M 10/0585* (2010.01)

(21) Anmeldenummer: 19168099.0

(22) Anmeldetag: **09.04.2019**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **09.04.2018  DE 102018205299**

(71) Anmelder: **Karlsruher Institut für Technologie 76131 Karlsruhe (DE)**

(72) Erfinder:
• **Keller, Marlou**
  **89077 Ulm (DE)**
• **Ates, Tugce**
  **89518 Heidenheim (DE)**
• **Passerini, Stefano**
  **89073 Ulm (DE)**

(74) Vertreter: **Altmann Stößel Dick Patentanwälte PartG mbB Dudenstrasse 46 68167 Mannheim (DE)**

(54) **VERFAHREN ZUR HERSTELLUNG EINES SCHICHTAUFBAUS FÜR EINEN LITHIUM-IONEN-FESTKÖRPERAKKUMULATOR**

(57) Es wird ein Verfahren zur Herstellung eines Schichtaufbaus (110) für einen Lithium-Ionen-Festkörperakkumulator (108) vorgeschlagen. Weiterhin werden ein Lithium-Ionen-Festkörperakkumulator (108) und dessen Verwendung vorgeschlagen. Das Verfahren umfasst die folgenden Schritte:

a) Bereitstellen einer Dispersion eines Kathodenkompositmaterials;

b) Aufbringen der Dispersion des Kathodenkompositmaterials auf ein Substrat (120) derart, dass sich mindestens eine Kathodenschicht (118) auf mindestens einer Substratoberfläche (122) des Substrats (120) ausbildet;

c) Aufbringen einer sulfidischen Elektrolytschicht (116) auf mindestens eine, der Substratoberfläche (122) gegenüberliegenden Kathodenoberfläche (124) der Kathodenschicht (118);

d) Aufbringen einer Elektrolytschutzschicht (114) auf mindestens eine, der Kathodenoberfläche (124) gegenüberliegende Elektrolytoberfläche (126); und

e) Aufbringen einer Anodenschicht (112) auf mindestens eine, der Elektrolytoberfläche (126) gegenüberliegende Elektrolytschutzschichtoberfläche (128), wodurch sich der Schichtaufbau (110) ausbildet, wobei die Anodenschicht (112) elementares Lithium aufweist.

Fig. 1

EP 3 553 867 A1

**Beschreibung**

Gebiet der Erfindung

Die vorliegende Erfindung betrifft ein Verfahren zur Herstellung eines Schichtaufbaus für einen Lithium-Ionen-Festkörperakkumulator, einen Lithium-Ionen-Festkörperakkumulator, sowie eine Verwendung eines Lithium-Ionen-Festkörperakkumulators. Die Erfindung ist insbesondere auf dem Gebiet der wiederaufladbaren Speicher für elektrische Energie auf elektrochemischer Basis angesiedelt. Der Lithium-Ionen-Festkörperakkumulator kann eingerichtet sein für eine Speicherung und Bereitstellung von elektrischer Energie. Anwendungsgebiete finden sich insbesondere in der Automobilindustrie und in der Unterhaltungselektronik, welche beispielweise Laptops und Smartphones umfasst.

Stand der Technik

Lithium-Ionen Batterien können Energie grundsätzlich effizient speichern und werden in vielen verschiedenen Anwendungen, wie beispielsweise in der Unterhaltungselektronik, im Bereich der Elektrowerkzeuge sowie im Bereich der Antriebe von Elektrofahrzeugen eingesetzt. Jedoch steigt der Bedarf an Batterien mit noch höherer Energiedichte. Unter der nächsten Generation von Batterietechnologien können sich grundsätzlich Lithium-Metall-Batterien befinden, welche Festkörperelektrolyten umfassen.

In US 2017/0040637 A1 wird ein Festkörper-Elektrolyt-Material der Formel

$$L_{1+2x}(M1)_{1-x}(M2)(M3)_4$$

beschrieben, wobei gilt: $0{,}25 < x < 1$. L ist ein Element ausgewählt aus einer Gruppe 1, M1 ist mindestens ein Element ausgewählt aus einer Gruppe 2, ein Element einer Gruppe 3, ein Element einer Gruppe 12. M3 ist mindestens ein Element ausgewählt aus einem Element einer Gruppe 5, einem Element einer Gruppe 14 und einem Element einer Gruppe 15.

Weiterhin ist M3 mindestens ein Element ausgewählt aus einem Element einer Gruppe 16. Weiterhin weist das Festkörper-Elektrolyt-Material eine I-4 Kristallstruktur auf.

US 2017/0162901 A1 beschreibt Batteriekomponenten für Sekundär- und/oder Traktionsbatterien. Hierin werden neue Festkörper-Lithium (Li)-leitende Elektrolyte beschrieben, einschließlich monolithische, einlagige und zweischichtige Festkörper-Sulfidbasierte Lithium-Ionen ($Li^+$), leitende Katholyte oder Elektrolyte. Diese Festkörperionenleiter weisen besondere chemische Zusammensetzungen auf, die durch sowohl kristalline als auch amorphe Bindungen angeordnet und/oder gebunden sind. Hierin werden auch Verfahren zur Herstellung dieser Festkörper-Sulfid-basierten Lithium-Ionen-Leiter einschließlich neuer Glühverfahren bereitgestellt. Diese Ionenleiter sind beispielsweise als Membranseparatoren in wiederaufladbaren Batterien nützlich.

In US 2017/0117551 A1 wird eine Lithium-Elektrode beschrieben. Die Lithium-Elektrode umfasst eine Elektrodenschicht, welche Lithium aufweist und eine Schutzschicht. Die Schutzschicht wird auf mindestens einer Oberfläche der Elektrodenschicht bereitgestellt und umfasst ein Polymer, welches für Lithium-Ionen leitfähig ist. Das Polymer umfasst mindestens eine funktionelle Gruppe ausgewählt aus: $-SO_3Li$, $-COOLi$, und $-OLi$.

In DE 10 2012 022607 A1 wird ein Lithium-Akkumulator und dessen Kombination mit einem Doppelschicht-Kondensator beschrieben, welcher sich durch einen Feststoff- bzw. Gelelektrolyten und einen Binder aus anorganisch-organischem Hybridpolymer auszeichnet. Durch das hier vorgestellte neue Binderkonzept ist es möglich, in diesen Akkumulatoren die Kontaktierung der einzelnen Komponenten zu revolutionieren und so eine grundlegende Verbesserung des Ionentransportes zu ermöglichen. Damit verbunden ist ein neues, schnelles, einfaches und flexibles Herstellungsverfahren für Lithium-Akkumulatoren, das diese hinsichtlich Sicherheit, Stabilität, Umweltfreundlichkeit und Leistungsfähigkeit optimiert.

Derartige Festkörper-Akkumulatoren erlauben grundsätzlich eine Verwendung von Lithium-Metall. Eine Voraussetzung dafür ist jedoch, dass ein Dendriten-Wachstum effizient unterdrückt wird, welches Kurzschlüsse verursachen kann. In der Vergangenheit wurden bereits sulfidische Elektrolyte eingesetzt. Sulfidische Elektrolyte können grundsätzlich vorteilhaft sein, da sie bei Raumtemperatur eine hohe elektrische Leitfähigkeit zeigen. Allerdings zeigen sulfidische Elektrolyte in Kombination mit Lithium-Metall bei geringen Potentialen eine intrinsische Instabilität. Weitere Herausforderungen können grundsätzlich in einer großmaßstäblichen Herstellung von derartigen Festkörperakkumulatoren bestehen. Im Labormaßstab werden derartige Festkörperakkumulatoren als Pellets hergestellt und untersucht. Dieses Herstellverfahren eignet sich jedoch grundsätzlich nicht für eine großmaßstäbliche Herstellung. Weiterhin können derartige Pellets lediglich eine geringere Energiedichte aufweisen, da durch dieses Verfahren die Elektrolyt-Schicht lediglich mit einer eher höheren Schichtdicke hergestellt werden kann.

Weiterhin weisen aus dem Stand der Technik bekannte Festkörperakkumulatoren, welche ein sulfidisches Elektrolytmaterial aufweisen und mittels eines großmaßstäblichen Herstellungsverfahrens hergestellt werden, üblicherweise Lithium-Indium-Legierungen auf oder Anoden, welche aus einem Kompositmaterial mit Graphit hergestellt sind. Lithium-Indium-Legierungen sind grundsätzlich sehr teuer und aufgrund dessen nicht geeignet für eine großmaßstäbliche Herstellung. Die Verwendung von Anoden, welche aus einem Kompositmaterial mit Graphit hergestellt sind, führt grundsätzlich zu einem zusätzlichen Herstellungsschritt und führt grundsätzlich zu einer niedrigeren Energiedichte und einer niedrigen spezifischen Energie des Festkörperakkumulators aufgrund von einem höheren Potential und einer niedrigeren Kapazität des Graphits im Vergleich zum Lithium.

Aufgabe der Erfindung

Ausgehend hiervon besteht die Aufgabe der vorliegenden Erfindung darin, ein Verfahren zur Herstellung eines Schichtaufbaus für einen Lithium-Ionen-Festkörperakkumulator, einen Lithium-Ionen-Festkörperakkumulator, sowie eine Verwendung des Lithium-Ionen-Festkörperakkumulators bereitzustellen, welche die aufgeführten Nachteile und Einschränkungen des Standes der Technik zumindest teilweise überwinden.

Insbesondere soll das Verfahren zur Herstellung eines Schichtaufbaus für einen Lithium-Ionen-Festkörperakkumulator eine großmaßstäbliche Herstellung ermöglichen. Das Verfahren soll insbesondere skalierbar sein. Darüber hinaus soll Lithium-Ionen-Festkörperakkumulator eine hohe Energiedichte ermöglichen. Eine Anodenschicht des Lithium-Ionen Festkörperakkumulators soll geschützt sein, sodass das Dendriten-Wachstum zumindest weitgehend vermieden wird.

Offenbarung der Erfindung

Diese Aufgabe wird durch ein Verfahren zur Herstellung eines Schichtaufbaus für einen Lithium-Ionen-Festkörperakkumulator, einen Lithium-Ionen-Festkörperakkumulator, sowie eine Verwendung des Lithium-Ionen-Festkörperakkumulators gelöst. Vorteilhafte Weiterbildungen, welche einzeln oder in beliebiger Kombination realisierbar sind, sind in den abhängigen Ansprüchen dargestellt.

Im Folgenden werden die Begriffe "haben", "aufweisen", "umfassen" oder "einschließen" oder beliebige grammatikalische Abweichungen davon in nicht-ausschließlicher Weise verwendet. Dementsprechend können sich diese Begriffe sowohl auf Situationen beziehen, in welchen, neben den durch diese Begriffe eingeführten Merkmalen, keine weiteren Merkmale vorhanden sind, oder auf Situationen, in welchen ein oder mehrere weitere Merkmale vorhanden sind. Beispielsweise kann sich der Ausdruck "A hat B", "A weist B auf', "A umfasst B" oder "A schließt B ein" sowohl auf die Situation beziehen, in welcher, abgesehen von B, kein weiteres Element in A vorhanden ist (d.h. auf eine Situation, in welcher A ausschließlich aus B besteht), als auch auf die Situation, in welcher, zusätzlich zu B, ein oder mehrere weitere Elemente in A vorhanden sind, beispielsweise Element C, Elemente C und D oder sogar weitere Elemente.

Weiterhin wird darauf hingewiesen, dass die Begriffe "mindestens ein" und "ein oder mehrere" sowie grammatikalische Abwandlungen dieser Begriffe, wenn diese in Zusammenhang mit einem oder mehreren Elementen oder Merkmalen verwendet werden und ausdrücken sollen, dass das Element oder Merkmal einfach oder mehrfach vorgesehen sein kann, in der Regel lediglich einmalig verwendet werden, beispielsweise bei der erstmaligen Einführung des Merkmals oder Elementes. Bei einer nachfolgenden erneuten Erwähnung des Merkmals oder Elementes wird der entsprechende Begriff "mindestens ein" oder "ein oder mehrere" in der Regel nicht mehr verwendet, ohne dass hierdurch die Möglichkeit eingeschränkt wird, dass das Merkmal oder Element einfach oder mehrfach vorgesehen sein kann.

Weiterhin werden im Folgenden die Begriffe "vorzugsweise", "insbesondere", "beispielsweise" oder ähnliche Begriffe in Verbindung mit optionalen Merkmalen verwendet, ohne dass alternative Ausführungsformen hierdurch beschränkt werden. So sind Merkmale, welche durch diese Begriffe eingeleitet werden, optionale Merkmale, und es ist nicht beabsichtigt, durch diese Merkmale den Schutzumfang der Ansprüche und insbesondere der unabhängigen Ansprüche einzuschränken. So kann die Erfindung, wie der Fachmann erkennen wird, auch unter Verwendung anderer Ausgestaltungen durchgeführt werden. In ähnlicher Weise werden Merkmale, welche durch "in einer Ausführungsform der Erfindung" oder durch "in einem Ausführungsbeispiel der Erfindung" eingeleitet werden, als optionale Merkmale verstanden, ohne dass hierdurch alternative Ausgestaltungen oder der Schutzumfang der unabhängigen Ansprüche eingeschränkt werden soll. Weiterhin sollen durch diese einleitenden Ausdrücke sämtliche Möglichkeiten unangetastet bleiben, die hierdurch eingeleiteten Merkmale mit anderen Merkmalen zu kombinieren, seien es optionale oder nicht-optionale Merkmale.

In einem ersten Aspekt der vorliegenden Erfindung wird ein Verfahren zur Herstellung eines Schichtaufbaus für einen Lithium-Ionen-Festkörperakkumulator vorgeschlagen. Das Verfahren kann die Verfahrensschritte, welche im Folgenden beschrieben werden, umfassen. Die Verfahrensschritte können insbesondere in der vorgegebenen Reihenfolge durchgeführt werden. Eine andere Reihenfolge ist jedoch ebenfalls denkbar. Weiterhin können ein oder mehrere Verfahrensschritte gleichzeitig oder zeitlich überlappend durchgeführt werden. Weiterhin können einer, mehrere oder alle der Verfahrensschritte einfach oder auch wiederholt durchgeführt werden. Das Verfahren kann darüber hinaus noch weitere Verfahrensschritte umfassen.

Der Begriff "Festkörperakkumulator" bezeichnet grundsätzlich einen beliebigen wiederaufladbaren Speicher für elektrische Energie auf elektrochemischer Basis, bei welchem beide Elektroden und der mindestens eine Elektrolyt des Festkörperakkumulators aus einem festen Material hergestellt sind. Der Elektrolyt kann daher als Festkörperelektrolyt bezeichnet werden. Ein Ladungstransport in den Festkörperelektrolyten kann grundsätzlich auf Sprüngen von Ionen zwischen definierten Plätzen in einer Festkörpermatrix beruhen.

Der Begriff "Lithium-Ionen-Festkörperakkumulator" bezeichnet grundsätzlich einen beliebigen Festkörperakkumulator, bei welchem mindestens eine der Elektroden und der Elektrolyt des Festkörperakkumulators Lithium-Verbindungen aufweisen. Insbesondere kann der Elektrolyt Lithium-Ionen aufweisen. Es können Lithium-Ionen frei durch den Elektrolyten zwischen den beiden Elektroden wandern. In einem geladenen Lithium-Ionen-Festkörperakkumulator kann eine elektrische Potentialdifferenz der Elektroden in einem elektrochemischen Prozess mit einer Stoffänderung der Elektroden unter Wanderung der Lithium-Ionen zur Stromerzeugung genutzt werden. Im Gegensatz zu den Lithium-Ionen können weitere Materialien der Elektroden ortsfest sein und durch einen Separator vor einem direkten Kontakt geschützt sein.

Der Begriff "Elektrode" bezeichnet grundsätzlich einen beliebigen Elektronenleiter, welcher in einem Zusammenspiel mit einer Gegenelektrode mit einem zwischen der Elektrode und der Gegenelektrode befindlichen Medium in einer Wechselwirkung stehen kann. Die Elektrode kann insbesondere mindestens ein elektrisch leitendes Material umfassen. Insbesondere kann die Elektrode ein elektrochemisch aktives Material sein oder umfassen. Die Elektrode kann insbesondere eine Kompositelektrode sein oder umfassen.

Der Begriff "Kompositelektrode" bezeichnet grundsätzlich eine beliebige Elektrode, welche aus mindestens einem Kompositmaterial hergestellt. ist. Die Kompositelektrode kann mindestens ein Aktivmaterial aufweisen. Das Aktivmaterial kann insbesondere ein Lithium-Ionen-Speichermaterial sein. Weiterhin kann das Aktivmaterial elektrisch nicht leitfähig sein. Darüber hinaus kann die Kompositelektrode mindestens ein Leitadditiv, mindestens ein Bindermaterial und/oder mindestens einen Ionen-leitfähigen Elektrolyten aufweisen. Das Bindermaterial kann eingerichtet sein, um Materialien der Kompositelektrode zusammenzuhalten und auf einen Stromsammler oder -ableiter zu fixieren. Bei einem Festkörperakkumulator ist es jedoch bevorzugt, dass der Elektrolyt porenfrei, oder zumindest weitgehend porenfrei ist.

Ein Medium, welches an die Elektrode grenzt, kann insbesondere ein flüssiger oder fester Ionenleiter sein. Unterschiedliche elektrochemische Potentiale der Elektroden können grundsätzlich zu einer Spannungsdifferenz führen. Durch Oxidations- und Reduktionsreaktionen durch eine Stromentnahme, insbesondere durch einen Entladevorgang, oder durch eine Stromzuführung, wie durch einen Ladevorgang, können sich die elektrochemischen Potentiale der Elektroden und damit eine resultierende Spannung der Zelle verändern. Der Begriff "Kathode" bezeichnet grundsätzlich eine Elektrode, an der Elektronen während des Entladevorgangs einem Bauteil zugeführt werden. Die Kathode kann daher eine positive Elektrode sein, wobei in einem Betrieb des Festkörperakkumulators ein Entladevorgang stattfindet. Während eines Aufladevorgangs des Festkörperakkumulators hingegen, kann die Elektrode, welche während des Entladevorgangs als Kathode fungiert, als Anode fungieren Die Kathode kann insbesondere eingerichtet sein, um während des Entladens Reduktionsreaktionen stattfinden zu lassen. Die Elektronen können über einen elektrischen Leiter zugeführt werden und die Kathode kann eingerichtet sein, die Elektronen und Lithium-Ionen als Speichermedium aufzunehmen. Insbesondere können die Lithium-Ionen und Elektronen von der Kathode aufgenommen werden und Übergangsmetalle in der Kathode können unter einer Aufnahme von Elektronen reduziert werden. Beispielsweise kann folgende Reaktion stattfinden:

$$Co^{4+} + e^- \rightarrow Co^{3+} \text{ in } Li_xCoO_2$$

Die elektrochemische Reaktion kann grundsätzlich innerhalb eines Materials der Kathode und/oder an einer Phasengrenze zwischen der Kathode und einem Elektrolyten stattfinden, insbesondere an einer Phasengrenze zwischen dem Aktivmaterial, dem Elektrolyt und dem Leitadditiv. Der Festkörperelektrolyt kann eingerichtet sein, um Kationen der Kathode zuzuführen.

Der Begriff "Anode" bezeichnet hingegen grundsätzlich eine Elektrode, welche eingerichtet ist, Elektronen während des Entladevorgangs an einen Stromsammler abzugeben und insbesondere an einen Elektrolyten unter Elektronenabgabe Kationen abzugeben. Die Anode kann insbesondere eingerichtet sein, um Oxidationsreaktionen während des Entladens stattfinden zu lassen. Beispielsweise kann folgende Reaktion stattfinden:

$$Li \rightarrow Li^+ + e^-$$

Bei einer Oxidationsreaktion können Elektronen aus einer elektrochemischen Reaktion über den elektrischen Anschluss abgegeben werden. Die elektrochemische Reaktion kann insbesondere an einer Phasengrenze zwischen einer Elektrode und einem Elektrolyt stattfinden. Bei einem Aufladevorgang hingegen kann die Elektrode, welche während des Entladevorgangs als Kathode fungiert, als Anode fungieren. Weiterhin kann bei dem Aufladevorgang die Elektrode, welche während des Entladevorgangs als Anode fungiert, als Kathode fungieren.

Die Anode und die Kathode können daher als Gegenelektroden bezeichnet werden. Werden die Anode und die Kathode zu einem Stromkreis verbunden, können über eine äußere Verbindung Elektronen zur Kathode fliesen. Der Festkörperakkumulator kann grundsätzlich wiederaufladbar sein. Deshalb kann eine Elektrode abwechselnd als Anode oder Kathode eingerichtet sein, je nachdem ob der Festkörperakkumulator geladen oder entladen wird.

Der Begriff "Elektrolyt" bezeichnet grundsätzlich eine beliebige chemische Verbindung, welche eine Mobilität der Ladungsträgerionen zwischen den Gegenelektroden ermöglicht. Die Ladungsträgerionen, hier vorzugsweise Lithium-Ionen, bewegen sich grundsätzlich unter einem Einfluss eines elektrischen Feldes gerichtet. Folglich können die Ladungsträgerionen, insbesondere die Lithium-Ionen, von einer Elektrode zu einer anderen Elektrode wandern. Dabei kann der Elektrolyt selbst eine geringe elektrische Leitfähigkeit aufweisen oder elektrisch nicht leitfähig sein, da sonst Elektronen als Ladungsträger durch den Elektrolyten wandern könnten. Dies könnte einen Kurzschluss gleichkommen, da Elektronen nicht mehr durch einen äußeren Stromkreis transportiert werden könnten. Unter einem "festen Elektrolyt" ist im Rahmen der vorliegenden Erfindung grundsätzlich ein beliebiger Elektrolyt, welcher als zumindest weitgehend als Festkörper vorliegt, d.h. der Elektrolyt liegt in einem festen Aggregatzustand vor und kann zumindest teilweise Ionenkristalle aufweisen. Der Elektrolyt kann jedoch auch amorphe Bereiche aufweisen. Weiterhin kann der Elektrolyt vollständig und/oder zumindest weitgehend amorph sein.

Das Verfahren umfasst die folgenden Schritte:

a) Bereitstellen einer Dispersion eines Kathodenkompositmaterials;

b) Aufbringen der Dispersion des Kathodenkompositmaterials auf ein Substrat derart, dass sich mindestens eine Kathodenschicht auf mindestens einer Substratoberfläche des Substrats ausbildet;

c) Aufbringen einer sulfidischen Elektrolytschicht auf mindestens eine, der Substratoberfläche gegenüberliegenden Kathodenoberfläche der Kathodenschicht;

d) Aufbringen einer Elektrolytschutzschicht auf mindestens eine, der Kathodenoberfläche gegenüberliegende Elektrolytoberfläche; und

e) Aufbringen einer Anodenschicht auf mindesten eine der Elektrolytoberfläche gegenüberliegende Elektrolytschutzschichtoberfläche, wodurch sich der Schichtaufbau ausbildet, wobei die Anodenschicht elementares Lithium aufweist.

Das Verfahren kann in einer inerten Atmosphäre durchgeführt werden. Beispielsweise kann das Verfahren in einer Argon-Atmosphäre durchgeführt werden. Es können insbesondere alle Verfahrensschritte a) bis e) in der inerten Atmosphäre durchgeführt werden. Auch andere Ausführungsformen sind jedoch grundsätzlich denkbar. Darüber hinaus kann das Verfahren noch weitere Verfahrensschritte umfassen, welche ebenfalls in der inerten Atmosphäre durchgeführt werden können.

Der Begriff "Schicht" bezeichnet grundsätzlich ein beliebiges Element mit einer länglichen Form und einer Dicke, wobei eine Ausdehnung des Elements in lateraler Dimension eine Dicke des Elements überschreitet, beispielsweise um einen Faktor von 10 bis 1000, vorzugsweise um einen Faktor von 200 bis 500. Die Schicht kann jedoch auch auf einem Substrat aufgebracht sein, welches eine Bahn mit Dimensionen von mehreren Metern ist oder umfasst. In diesem Fall kann der Faktor größer sein, beispielsweise kann die Ausdehnung des Elements in der lateralen Dimension die Dicke des Elements um einen Faktor von 100 bis 10000000, vorzugsweise von 400 bis 2000000, überschreiten. Die Bahn kann beispielsweise eine Dicke von 10 $\mu$m bis 500 $\mu$m, vorzugsweise von 20 $\mu$m bis 100 $\mu$m, vorzugsweise von 40 $\mu$m bis 60 $\mu$m und besonders bevorzugt von 50 $\mu$m, aufweisen. Weiterhin kann die Bahn eine Länge von 10 m bis 1000 m, vorzugsweise von 50 m bis 500 m, vorzugsweise von 80 m bis 200 m und besonders bevorzugt von 100 m aufweisen. Die Schicht kann eine durchgängige Schicht sein. Alternativ kann die Schicht jedoch an ein oder mehreren Stellen unterbrochen sein, beispielsweise durch Vertiefungen oder Risse.

Der Begriff "Kathodenschicht" bezeichnet grundsätzlich eine beliebige Schicht, welche während eines Entladevorgangs in einem Betrieb eines Festkörperakkumulators als Kathode eingerichtet ist bzw. fungieren kann. Der Begriff "Anodenschicht" bezeichnet grundsätzlich eine beliebige Schicht, welche während eines Entladevorgangs in einem Betrieb eines Festkörperakkumulators als Anode eingerichtet ist bzw. fungieren kann. Der Begriff "Elektrolytschicht" bezeichnet grundsätzlich eine beliebige Schicht, welche als Elektrolyt eingerichtet ist bzw. fungieren kann. Die Kathodenschicht kann eine Schichtdicke von 10 $\mu$m bis 500 $\mu$m, vorzugsweise von 20 $\mu$m bis 150 $\mu$m, aufweisen. Die Elektrolytschicht kann eine Schichtdicke von 1 $\mu$m bis 100 $\mu$m, vorzugsweise von 5 $\mu$m bis 50 $\mu$m, aufweisen. Die Elektrolytschutzschicht kann eine Schichtdicke von 1 $\mu$m bis 100 $\mu$m, vorzugsweise von 50 $\mu$m bis 70 $\mu$m, und besonders bevorzugt von 1 $\mu$m bis 10 $\mu$m, aufweisen. Die Anodenschicht kann eine Schichtdicke von 1 $\mu$m bis 500 $\mu$m, vorzugsweise von 20 $\mu$m bis 100 $\mu$m, und besonders bevorzugt von 40 $\mu$m bis 60 $\mu$m aufweisen. Die genannten Schichtdicken können sich insbesondere auf Schichtdicken in einem gepressten Zustand beziehen. Eine mittlere Porosität des Kathodenkompositmaterials kann grundsätzlich kleiner sein als 50 %, vorzugsweise kleiner als 40 %, vorzugsweise keiner als 30 %, vorzugsweise kleiner als 20 %, vorzugsweise kleiner als 10 %, vorzugsweise kleiner als 5 % und besonders bevorzugt kleiner als 1% sein. Weiterhin kann die mittlere Porosität des Kathodenkompositmaterials 0 % betragen. Eine mittlere Porosität des Elektrolytmaterials kann grundsätzlich kleiner sein als 50 %, vorzugsweise kleiner als 40 %, vorzugsweise kleiner als 30 %, vorzugsweise kleiner als 20 %, vorzugsweise kleiner als 10 %, vorzugsweise kleiner als 5 % und besonders bevorzugt kleiner als 1 % sein. Weiterhin kann die mittlere Porosität des Kathodenkompositmaterials 0 % betragen. Das Anodenmaterial kann insbesondere, wie unten noch weiter ausgeführt wird, ein dichtes Lithiummmetall sein. Eine mittlere Porosität des Anodenmaterials kann vorzugsweise kleiner als 5 % und besonders bevorzugt kleiner als 1 % sein. Weiterhin kann die mittlere Porosität des Anodenmaterials 0 % betragen.

Unter einem "Schichtaufbau" ist im Rahmen der vorliegenden Erfindung grundsätzlich eine Abfolge von mindestens zwei Schichten, welche direkt oder unter Zwischenschaltung einer oder mehrerer Zwischenschichten aufeinander aufgebracht sind, zu verstehen. Der Schichtaufbau kann mehrere Schichten desselben Materials aufweisen. Weiterhin kann der Schichtaufbau Schichten verschiedener Materialien aufweisen. Auch andere Ausführungsformen sind grundsätzlich denkbar. Der Begriff "gegenüberliegend" bezeichnet grundsätzlich eine entgegengesetzte Lage einer Oberfläche zu einer anderen Oberfläche, wobei die beiden Oberflächen aufeinanderliegend angeordnet sind. Hierbei können Abweichungen von einem Aneinandergrenzen der beiden Oberflächen auftreten. Die Abweichungen können beispielsweise maximal 20 %, vorzugsweise maximal 10 % und besonders bevorzugt maximal 5 % betragen. Eine Schicht des Schichtaufbaus kann insbesondere mindestens eine Längsseite und mindestens eine Stirnseite aufweisen, wobei die Längsseite länger ist als die Stirnseite. Eine erste Oberfläche einer ersten Längsseite einer ersten Schicht des Schichtaufbaus kann einer zweiten Oberfläche einer zweiten Längsseite einer zweiten Schicht des Schichtaufbaus gegenüberliegen. Insbesondere können die erste Oberfläche und die zweite Oberfläche in einem direkten Kontakt zueinander stehen. Insbesondere kann die zweite Schicht auf der ersten Schicht aufliegen, wobei sich die erste Oberfläche und die zweite Oberfläche zumindest teilweise berühren. In einer derartigen Anordnung kann die zweite Schicht beispielsweise kleinere Dimensionen, insbesondere eine kleinere Länge und/oder Breite, aufweisen als die erste Schicht oder umgekehrt. Dabei können Teile der zweiten Oberfläche von der ersten Schicht unbedeckt sein oder umgekehrt. Weiterhin können die erste Schicht und die zweite Schicht zueinander versetzt angeordnet sein, d.h. ein Teil der zweiten Schicht kann über einen Rand der ersten Schicht herausragen oder umgekehrt.

In Schritt a) wird, wie oben bereits ausgeführt, die Dispersion des Kathodenkompositmaterials hergestellt. Der Begriff "Kathodenkompositmaterial" bezeichnet grundsätzlich ein beliebiges Kompositmaterial, aus welcher eine Kathode gemäß der obigen Definition hergestellt ist. Der Begriff "Kompositmaterial" bezeichnet grundsätzlich ein beliebiges Material, welches zwei oder mehr miteinander verbundene Werkstoffe aufweist. Das Kompositmaterial kann daher andere Werkstoffeigenschaften aufweisen als seine einzelnen Werkstoffe. Eine Verbindung zwischen den zwei oder mehr Werkstoffen kann insbesondere durch Stoff- und/oder Formschluss erfolgen. Das Kathodenkompositmaterial kann, wie oben bereits ausgeführt, mindestens ein elektrisch leitfähiges Material, mindestens einen Binder für eine Adhäsion und Kohäsion, mindestens ein Aktivmaterial, wie es bereits oben beschrieben wurde oder im Folgenden noch beschrieben wird, umfassen. Das Kompositmaterial kann mindestens ein Material umfassen, welches elektrisch leitfähig ist, ausgewählt aus der Gruppe bestehend aus: Kohlenstoff, weitere elektrisch leitfähige Stoffe in unterschiedlichen Formen, wie beispielsweise Fasern, Partikel, Netzwerkstrukturen, Nanoröhren, Schichtstrukturen, insbesondere Graphen. Die Fasern können insbesondere eine Breite von 20 nm bis 500 nm, vorzugsweise von 50 nm bis 200 nm aufweisen. Weiterhin können die Fasern ein Verhältnis Breite:Länge von 1:200 bis 1:2000 aufweisen. Eine spezifische Oberfläche der Kohlenstofffasern kann 1 m$^2$/g bis 20 m$^2$/g, vorzugsweise 8 m$^2$/g bis 12 m$^2$/g und besonders bevorzugt 10 m$^2$/g bis 11 m$^2$/g betragen. Die Partikel können insbesondere kugelförmige Kohlenstoffpartikel sein mit einer durchschnittlichen Größe von 70 nm bis 90 nm, wobei die Kohlenstoffpartikel eine nanoporöse Netzwerkstruktur aufweisen können. Auch andere Ausgestaltungen sind jedoch grundsätzlich denkbar.

Das Kathodenkompositmaterial kann weiterhin mindestens ein Aktivmaterial aufweisen. Der Begriff "Aktivmaterial" bezeichnet grundsätzlich ein beliebiges Material, welches eingerichtet ist, Lithium-Ionen und Elektronen zu speichern. Das Aktivmaterial kann mindestens eine Oxidverbindung aufweisen, welche Lithium umfasst, sowie mindestens ein Metall ausgewählt aus der Gruppe bestehend aus: Kobalt, Mangan, Nickel. Das Aktivmaterial kann insbesondere ausgewählt sein aus mindestens einem Material aus der Gruppe bestehend aus: $LiNi_{1-x}Mn_xO_2$ (wobei $0<x<1$); $LiCoO_2$; $LiMn_2O_4$; $Li[Ni_xCo_{1-x-y}Al_y]O_2$ mit ($0<x<1$, $0<y<0,5$), $Li[Ni_xMn_yCo_{1-x-y}]O_2$ mit ($0<x<0,5$, $0<y≤0,5$); $Li_2S$; $LiFePO_4$; $LiMn_2O_3$; $LiV_2O_5$; $V_2O_5$; $Li_aA_{1-b}B_bD_2$ (wobei $0,9≤a≤1,8$ und $0≤b≤0,5$); $Li_aE_{1-b}B_bO_{2-c}D_c$ (wobei $0,90≤a≤1,8$ und $0≤b≤0,5$ und $0≤c≤0,05$); $LiE_{2-b}B_bO_{4-c}D_c$ (wobei $0≤b≤0,5$ und $0≤c≤0,05$); $Li_aNi_{1-b-c}Co_bB_cD_α$ (wobei $0,9≤a≤1,8$; $0≤b≤0,5$ und $0≤c≤0,05$ und $0≤α≤2$); $Li_aNi_{1-b-c}Co_bB_cO_{2-α}F_α$ (wobei $0,9≤a≤1,8$; $0≤b≤0,5$ und $0≤c≤0,05$ und $0≤α≤2$); $Li_aNi_{1-b-c}Mn_bB_cD_α$ (wobei $0,9≤a≤1,8$; $0≤b≤0,5$ und $0≤c≤0,05$ und $0≤α≤2$); $Li_aNi_{1-b-c}Mn_bB_cO_{2-α}F_α$ (wobei $0,9≤a≤1,8$; $0≤b≤0,5$ und $0≤c≤0,05$ und $0≤α≤2$); $Li_aNi_{1-b-c}Mn_bB_cO_{2-α}F_2$ (wobei $0,9≤a≤1,8$; $0≤b≤0,5$ und $0≤c≤0,05$ und $0≤α≤2$); $Li_aNi_bE_cG_dO_2$ (wobei $0,9≤a≤1,8$; $0≤b≤0,9$ und $0≤c≤0,5$ und $0,001≤d≤0,1$); $Li_aNi_bCo_cMn_dGeO_2$ (wobei $0,9≤a≤1,8$; $0≤b≤0,9$ und $0≤c≤0,5$ und $0≤d≤0,5$); $Li_aNiG_bO_2$ (wobei $0,9≤a≤1,8$; $0,001≤b≤0,1$); $Li_aCoG_bO_2$ (wobei $0,9≤a≤1,8$; $0,001≤b≤0,1$); $Li_aCoG_bO_2$ (wobei $0,9≤a≤1,8$; $0,001≤b≤0,1$); $Li_aCoG_bO_2$ (wobei $0,9≤a≤1,8$; $0,001≤b≤0,1$); $Li_aMnG_bO_2$ (wobei $0,9≤a≤1,8$; $0,001≤b≤0,1$); $Li_aMn_2G_bO_4$ (wobei $0,9≤a≤1,8$; $0,001≤b≤0,1$); $QO_2$; $Qs_2$; $LiQS_2$; $V_2O_5$; $LiV_2O_2$; $LiIO_2$; $Li_{(3-f)}J_2(PO_4)_3$ (wobei $0≤f≤2$); $Li_{(3-f)}Fe_2(PO_4)_3$

(wobei 0≤f≤2); LiFePO$_4$. Dabei kann A ausgewählt sein aus der Gruppe bestehend aus Ni, Co, Mn. B kann ausgewählt sein aus der Gruppe bestehend aus Al, Ni, Co, Mn, Cr, Fe, Mg, Sr, V. D kann ausgewählt sein aus der Gruppe bestehend aus O, F, S. E kann ausgewählt sein aus der Gruppe bestehend aus Co, Mn. F kann ausgewählt sein aus der Gruppe bestehend aus Al, Cr, Mn, Fe, Mg, La, Ce, Sr und V. Q kann ausgewählt sein aus der Gruppe bestehend aus Ti, Mo, Mn. I kann ausgewählt sein aus der Gruppe bestehend aus Cr, V, Fe, Sc, Y. J kann ausgewählt sein aus der Gruppe bestehend aus V, Cr, Mn, Co, Ni, Cu.

Das Aktivmaterial kann Partikel, insbesondere kugelförmige Partikel, mit einem durchschnittlichen Partikeldurchmesser von 1 μm bis 15 μm, vorzugsweise von 2 μm bis 7 μm aufweisen. Eine spezifische Oberfläche des Aktivmaterials kann 0,1 m$^2$/g bis 0,7 m$^2$/g, vorzugsweise 0,3 m$^2$/g bis 0,5 m$^2$/g, betragen.

Der Begriff "Bereitstellen" bezeichnet grundsätzlich einen beliebigen Vorgang, bei welchem ein beliebiger Gegenstand, insbesondere ein beliebiges Material, zur Verfügung gestellt wird, sodass der Gegenstand bzw. das Material für eine Verarbeitung verwendet werden kann. Das Bereitstellen kann auch ein Herstellen des Gegenstands bzw. des Materials umfassen.

Das Kathodenkompositmaterial wird, wie oben bereits ausgeführt, als Dispersion bereitgestellt. Unter einer "Dispersion" ist im Rahmen der vorliegenden Erfindung grundsätzlich ein beliebiges heterogenes Gemisch aus mindestens zwei Stoffen zu verstehen. Die Stoffe können insbesondere derart beschaffen sein, dass diese sich nicht oder zumindest weitgehend nicht ineinander lösen und/oder chemisch miteinander verbinden. Die Dispersion kann insbesondere mindestens eine flüssige Komponente aufweisen, welche als Dispersionsmedium bezeichnet werden kann. Weiterhin kann die Dispersion mindestens eine feste Phase aufweisen, welche auch als disperse Phase oder dispergierte Phase bezeichnet werden kann. Insbesondere kann das elektrisch leitfähige Material, wie beispielsweise die Kohlenstofffasern, in dem Lösemittel, insbesondere Toluol, dispergiert werden. Das Lösemittel kann identisch sein zu dem Lösemittel der Dispersion des Kathodenkompositmaterials. Das Dispergieren kann insbesondere mittels eines Magnetrührers oder mittels Ultraschallbehandlung erfolgen. In einem separaten Schritt kann eine Dispersion des aktiven Materials bereitgestellt werden. Die Dispersion des elektrisch leitfähigen Materials kann anschließend zu der Dispersion des aktiven Materials zugefügt werden und vermischt werden.

Die Dispersion des Kathodenkompositmaterials kann insbesondere mindestens ein organisches Lösemittel aufweisen. Das organische Lösemittel kann als Dispersionsmedium eingesetzt werden. Das organische Lösemittel kann insbesondere ein inertes Lösemittel sein. Weiterhin kann das organische Lösemittel zumindest weitgehend frei sein von reaktiven Gruppen, d.h. zumindest weitgehend keine reaktiven Gruppen aufweisen. Das organische Lösemittel kann zumindest weitgehend frei von Wasserresten sein. Das organische Lösemittel kann ausgewählt sein aus der Gruppe bestehend aus: aromatischen Kohlenwasserstoffen wie Toluol, Xylole und aliphatischen Kohlenwasserstoffen wie Hexan, Heptan, Oktan.

Die Dispersion kann beispielsweise durch einen Mahlprozess hergestellt werden. Hierbei kann das Kathodenkompositmaterial in dem organischen Lösemittel gemahlen werden. Insbesondere kann das Kathodenkompositmaterial per Hand oder automatisiert mit einem Mörser oder einer Mühle gemahlen werden, vorzugsweise über einen Zeitraum von 5 min bis 60 min, besonders bevorzugt über einen Zeitraum von 20 min bis 40 min. Dieser Vorgang kann in der inerten Atmosphäre durchgeführt werden. Andere Mahlprozesse sind jedoch ebenfalls denkbar, beispielsweise durch Mixen.

Zusätzlich kann das Kathodenkompositmaterial mindestens ein Polymer umfassen, der als Binder fungieren und die Kohäsion an dem Substrat sowie der Adhäsion der Materialien innerhalb der Kompositkathode gewährleisten kann. Das Polymer kann ausgewählt sein aus der Gruppe bestehend aus: inerten Kohlenwassersoff-basierten Polymeren, insbesondere Polyisobutylen, Styrol-Butadien-Kautschuke, Polystyrol, Polybutadien, Polyethylen oder Kombinationen und Derivate dessen. Das Polymer kann vor Hinzufügen in eine Kathodendispersion in einem inerten Lösungsmittel gelöst werden und so der Kathodendispersion hinzugefügt werden.

Wie bereits oben aufgeführt, wird in Schritt b) die Dispersion des Kathodenkompositmaterials auf das Substrat aufgebracht. Der Begriff "Substrat" bezeichnet grundsätzlich ein beliebiges Element, welches eingerichtet ist, ein oder mehrere weitere Elemente zu tragen und welches dementsprechend eine mechanische Stabilität aufweist. Das Substrat kann insbesondere scheibenförmig oder plattenförmig ausgebildet sein. Auch andere Ausgestaltungen sind grundsätzlich denkbar. Das Substrat kann insbesondere ein elektrisch leitfähiges Material aufweisen. Daher kann das Substrat auf einer Kathodenoberfläche der Kathodenschicht verbleiben, insbesondere auf einer Kathodenoberfläche, welche der Elektrolytschicht, welche im Nachfolgenden noch näher beschrieben wird, gegenüberliegt. Ein Teil des Substrats, insbesondere der Teil, auf welchem die Kathodenschicht aufgebracht ist, kann von einem anderen Teil des Substrats entfernt werden, beispielsweise durch Ausstanzen, und Teil des Schichtaufbaus sein. Das Substrat kann daher als Stromkollektor in dem Lithium-Ionen-Festkörperakkumulator eingerichtet sein. Das Substrat kann mindestens ein Material umfassen, ausgewählt aus der Gruppe bestehend aus: Aluminium, Kupfer, Nickel, Edelstahl oder einer Verbindung aus mehreren dieser Materialien. Beispielsweise kann das Substrat Aluminium aufweisen, welches auf einer Rückseite mit Kupfer beschichtet ist. Alternativ kann das Substrat jedoch wieder von der Kathodenschicht entfernt werden. In diesem Fall kann das Substrat auch aus nicht-leitenden Materialien hergestellt sein, beispielsweise aus einem Kunststoffmaterial.

Der Begriff "Aufbringen" bezeichnet grundsätzlich einen beliebigen Vorgang, bei welchem ein Material auf eine beliebige Oberfläche eines weiteren Elements angebracht wird. Insbesondere kann das Material derart auf die Oberfläche angebracht werden, dass das Material anschließend, gegebenenfalls auch durch einen nachfolgenden Trocknungsschritt, an der Oberfläche haftet. Das Aufbringen kann auch ein Beschichten der Oberfläche mit dem Material sein oder umfassen. Der Begriff "Beschichten" bezeichnet grundsätzlich ein Aufbringen einer Schicht, insbesondere einer festhaftenden Schicht, aus einem formlosen Stoff auf eine beliebige Oberfläche eines Elements oder Werkstücks. Das Beschichten kann ein Aufbringen einer einzelnen Schicht oder auch ein Aufbringen von mehreren Schichten, insbesondere von mehreren übereinanderliegenden Schichten, umfassen.

Das Aufbringen kann mittels mindestens eines Nassbeschichtungsverfahrens durchgeführt werden. Schritt b) kann mittels mindestens eines Nassbeschichtungsverfahrens durchgeführt werden. Der Begriff "Nassbeschichtungsverfahren" bezeichnet grundsätzlich ein beliebiges Beschichtungsverfahren, bei welchem ein auf eine Oberfläche aufzubringendes Material einen flüssigen und/oder gelösten und/oder dispergierten Ausgangszustand aufweist. Das Aufbringen kann daher mindestens ein Verfahren aufweisen ausgewählt aus der Gruppe bestehend aus: Rakelbeschichtung; Rotationsbeschichtung, Tauchbeschichtung, Sprühbeschichtung, Walzenbeschichtung. Auch andere Verfahren sind grundsätzlich denkbar.

In Schritt c) wird, wie oben ausgeführt, die sulfidische Elektrolytschicht auf die, der Substratoberfläche gegenüberliegende Kathodenoberfläche aufgebracht. Anschließend kann die sulfidische Elektrolytschicht auf der Kathodenschicht verpresst werden, insbesondere um die Porosität zu reduzieren. Der Begriff "sulfidische Elektrolytschicht" bezeichnet eine Schicht, welche ein sulfidisches Elektrolytmaterial aufweist, wobei mindestens eine Komponente des sulfidischen Elektrolytmaterials ein Sulfid ist oder umfasst. Die Elektrolytschicht kann mindestens ein sulfidisches Elektrolytmaterial umfassen, ausgewählt aus der Gruppe bestehend aus amorphen, kristallinen oder amorphkeramischen Elektrolyten wie $Li_2S \cdot P_2S_5$ unterschiedlicher Verhältnisse, vorzugsweise versetzt mit LiI, LiCl, LiBr, $Li_2O$ oder $B_2S_3$; beispielsweise $Li_3PS_4$ unterschiedlicher Phasen, insbesondere γ-Phase oder β-Phase, $Li_7P_3S_{11}$, Verbindungen unterschiedlicher Verhältnisse von $Li_2S$-$M_xS_y$-$P_2S_5$ mit M = Zn, Ge, Ga, Sn, Si, insbesondere $Li_{10}GeP_2S_{12}$, $Li_{11}Si_2PS_{12}$, $Li_{14}ZnGe_4O_{16}$. Zusätzlich kann die Elektrolytschicht mindestens ein Polymer umfassen, ausgewählt aus der Gruppe bestehend aus inerten Kohlenwassersoff-basierten Polymeren, Polyisobuten, Styrol-Butadien-Kautschuke, Polystyrol, Polybutadien, Polyethylen oder Kombinationen und Derivate dessen.

Die Elektrolytschicht und/oder die Kathodenschicht können weiterhin mindestens ein organisches, inertes Bindemittel aufweisen. Das inerte Bindemittel kann insbesondere Polyisobutylen sein oder umfassen. Das Bindemittel, insbesondere ein Polymerbinder kann vor Hinzufügen in eine Elektrolytdispersion in einem inerten Lösungsmittel gelöst werden und so der Elektrolytdispersion hinzugefügt werden. Das Bindemittel kann eine Adhäsion an dem Substrat und die Kohäsion der Elektrolytpartikel untereinander gewährleisten.

Das Elektrolytmaterial kann nanokristalline Partikel, insbesondere zusammengefügt in stäbchenförmigen Partikeln mit einer durchschnittlichen Partikellänge von 1 μm bis 30 μm, vorzugsweise von 2 μm bis 20 μm aufweisen. Auch andere Dimensionen sind grundsätzlich denkbar.

Das Verfahren kann insbesondere ein Bereitstellen einer Dispersion des Elektrolytmaterials umfassen. Die Dispersion des Elektrolytmaterials kann als Dispersionsmittel ebenfalls ein inertes Lösemittel, welches das gleiche sein kann, wie auch für die Dispersion des Kathodenkompositmaterials verwendet wurde, aufweisen, wie es bereits beschrieben wurde oder im Folgenden noch beschrieben wird.

Schritt c) kann insbesondere folgende Teilschritte umfassen:

c1) Aufbringen der Dispersion des Elektrolytmaterials auf ein weiteres Substrat derart, dass sich die Elektrolytschicht auf mindestens einer weiteren Substratoberfläche eines weiteren Substrats ausbildet;

c2) Verbinden der Elektrolytschicht mit der Kathodenschicht mittels mindestens eines Pressverfahrens.

Der Schritt c1) kann mittels mindestens eines Nassbeschichtungsverfahrens durchgeführt werden, wie es bereits beschrieben wurde oder im Folgenden noch beschrieben wird. Zwischen Schritt c1) und c2) kann ein Trocknungsschritt erfolgen.

Das weitere Substrat kann ganz oder teilweise aus mindestens einem Kunststoffmaterial hergestellt sein, beispielsweise aus Polyester. Insbesondere kann das Substrat eine silikonisierte Dehäsivfolie aus Polyester sein. Auch andere Materialien sind jedoch grundsätzlich denkbar. Das weitere Substrat kann als Folie ausgebildet sein. Weiterhin kann das weitere Substrat derart ausgebildet sein, dass es von der Elektrolytschicht abziehbar ist. Die Elektrolytschicht kann daher vor Durchführen des Schritts c2) von dem weiteren Substrat gelöst werden. Alternativ kann die Elektrolytschicht nach Durchführen des Schritts c2) von dem weiteren Substrat gelöst werden.

Der Begriff "Verbinden" bezeichnet grundsätzlich ein Zusammenfügen von zwei oder mehr Elementen zu einem einzelnen Objekt, insbesondere formschlüssig und/oder kraftschlüssig. Der Begriff "Pressverfahren" bezeichnet grundsätzlich ein beliebiges Verfahren, bei welchem zwei oder mehr Elemente durch eine Einwirkung von Druck zu einem einzelnen Objekt zusammengefügt werden, insbesondere formschlüssig und/oder kraftschlüssig. Das Pressverfahren kann ein Kaltpressverfahren umfassen, bei welchem ein Pressvorgang zumindest weitgehend ohne zusätzliche Wärmezufuhr erfolgt. Weiterhin kann das Pressverfahren ein Heißpressverfahren umfassen, bei welchem der Pressvorgang mit zusätzlicher Wärmezufuhr erfolgt. Insbesondere kann der Pressvorgang bei einer Temperatur von 30 °C bis 200 °C, vorzugsweise von 50 °C bis 150 °C und besonders bevorzugt von 90 °C bis 110 °C erfolgen. Dabei kann der Pressvorgang über eine Dauer von 1 Sekunde bis 120 Sekunden, vorzugweise über eine Dauer von 1 Sekunde bis 30 Sekunden und besonders bevorzugt über eine Dauer von 10 Sekunden erfolgen. Auch ein automatisiertes Kalandrieren ist möglich, welches die Kathodenschicht und die Elektrolytschicht kontinuierlich durch einen hohen Druck miteinander verbindet. Bei dem Pressvorgang kann insbesondere ein Druck von 5 MPa bis 50 MPa, vorzugsweise von 10 MPa bis 20 MPa und besonders bevorzugt von 16 MPa angewendet werden. Auch andere Größenordnungen für den Druck sind jedoch grundsätzlich denkbar.

Weiterhin kann die Elektrolytschicht durch Foliengießen als Band hergestellt werden. Das Band kann anschließend zugeschnitten werden und auf die Kathodenschicht aufgebracht werden, insbesondere mittels des Kaltpressverfahrens. Alternativ kann jedoch das Band zunächst auf die Kathodenschicht aufgebracht werden und das Band kann anschließend zugeschnitten werden.

Alternativ kann Schritt c) den folgenden Teilschritt umfassen:

c') Aufbringen der Dispersion des Elektrolytmaterials auf die Kathodenoberfläche der Kathodenschicht, derart, dass sich die Elektrolytschicht ausbildet.

Schritt c') kann mittels mindestens eines Nassbeschichtungsverfahrens durchgeführt werden, wie es bereits beschrieben wurde oder im Folgenden noch beschrieben wird. Anschließend kann ein Pressverfahren erfolgen, insbesondere um die Kathodenschicht und/oder die Elektrolytschicht zu verdichten und um eine Porosität zu reduzieren.

In Schritt d) wird, wie oben bereits beschrieben, das Aufbringen der Elektrolytschutzschicht auf die, der Kathodenoberfläche gegenüberliegende Elektrolytoberfläche aufgebracht. Der Begriff "Elektrolytschutzschicht" bezeichnet grundsätzlich eine Schicht, welche eingerichtet ist die Elektrolytschicht zu schützen. Die Elektrolytschutzschicht kann als mechanische Barriere zwischen der Anodenschicht und der Elektrolytschicht eingerichtet sein. Eine chemische Zersetzung des Elektrolytmaterials in Gegenwart von Lithium-Metall kann somit vermieden werden. Insbesondere kann die Elektrolytschutzschicht eingerichtet sein, ein Dendritenwachstum zu unterdrücken und elektrische Kurzschlüsse zu vermeiden.

Die Elektrolytschutzschicht kann mindestens ein Polymermaterial aufweisen, ausgewählt aus der Gruppe bestehend aus: Polyethylenoxid (PEO) unterschiedlichen Molekulargewichtes, Polyethylencarbonat (PEC), Polypropylencarbonat (PPC), Polylactid (PLA). Das Polymermaterial kann mit einem Leitsalz LiX mit X als Anion wie $PF_6^-$, $ClO_4^-$, $BF_4^-$, TFSI$^-$($C_2F_6NO_4S_2^-$), FSI$^-$($F_2NO_4S_2^-$), Tf$^-$($CF_3SO_3^-$) von verschiedenen Verhältnissen (EO):Li$^+$ versetzt sein. Das Polymermaterial kann beispielsweise PEO$_{15}$LiTFSI sein.

Weiterhin kann die Elektrolytschutzschicht mindestens eine ionische Flüssigkeit aufweisen. Der Begriff "ionische Flüssigkeit" bezeichnet grundsätzlich ein beliebiges organisches Salz, welches bei einer Temperatur von unter 100 °C zumindest weitgehend in einem flüssigen Aggregatzustand vorliegt. Ionen der ionischen Flüssigkeit bilden grundsätzlich aufgrund von Ladungsdelokalisierung und sterischen Effekten kein stabiles Kristallgitter aus. Die ionische Flüssigkeit kann insbesondere ausgewählt sein aus der Gruppe bestehend aus: K$^+$A$^-$ in dem das Kation K$^+$ beispielsweise folgende Verbindungen einschließt: N-propyl-N-methylpyrrolidinium, N-butyl-N-methylpyrrolidinium, N-methoxyethyl, N-methylpyrrolidinium, 1-ethyl-3-methylimidazolium, 1-butyl-3-methylimidazolium, N-methyl-N-propylpiperidinium. Das Anion A$^-$ umfasst unter anderen: hexafluorophosphat, bis(trifluoromethanesulfonyl)imid, trifluoromethanesulfonat, tetrafluoroborat oder bis(fluorosulfonyl)imid.

Die Elektrolytschutzschicht kann insbesondere als Membran ausgebildet sein. Unter einer "Membran" ist allgemein im Rahmen der vorliegenden Erfindung ein beliebiges Element mit einer länglichen Form und einer Dicke zu verstehen, wobei die Ausdehnung des Elements in lateraler Dimension die Dicke des Elements überschreitet, beispielsweise um einen Faktor von 10 bis 1000, vorzugsweise um einen Faktor von 200 bis 500. Die Membran kann für bestimmte Teilchen und/oder Ionen durchlässig ausgestaltet sein.

Die Elektrolytschutzschicht kann mittels mindestens eines Nassbeschichtungsverfahrens hergestellt werden. Alternativ kann diese durch ein lösungsmittelfreies Verfahren hergestellt werden, beispielsweise einem Heißpressverfahren oder durch Extrusion. Dies hat den Vorteil, dass Lösungsmittelreste und -recycling vermieden werden können. So können sich selbststehende oder auf einem Substrat aufgetragene Elektrolytschutzschichtfolien herstellen lassen. Der Ausdruck "mittels mindestens eines Nassbeschichtungsverfahrens hergestellt werden" umfasst grundsätzlich ein Aufbringen einer Lösung eines Elektrolytschutzschichtmaterials auf die, der Kathodenoberfläche gegenüberliegende Elektrolytoberfläche, derart, dass sich die Elektrolytschutzschicht ausbildet. Weiterhin umfasst der Ausdruck "mittels mindestens eines Nassbeschichtungsverfahrens hergestellt werden" ein Aufbringen der Lösung des Elektrolytschutzschichtmaterials auf das weitere Substrat, derart, dass sich die Elektrolytschutzschicht auf der weiteren Substratoberfläche ausbildet.

Anschließend kann die Elektrolytschutzschicht mit der Elektrolytschicht verbunden werden, beispielsweise mittels des Kaltpressverfahrens, wie es bereits beschrieben wurde oder im Folgenden noch beschrieben wird. Weiterhin kann die Elektrolytschutzschicht durch einfaches Aufbringen und/oder Auflagen und durch eine anschließende nachträgliche Erhitzung des Schichtaufbaus nach einem Zusammenbau unter einem äußeren Druck verbunden werden. Die Erhitzung kann insbesondere bei einer Temperatur von mindestens 50 °C, vorzugsweise von mindestens 60 °C durchgeführt werden. Insbesondere kann die Temperatur oberhalb eines Schmelzpunktes des Elektrolytschutzschichtmaterials liegen.

Weiterhin kann Schritt d) nach Durchführen des Schritts c1) und/oder nach Durchführen des Schritts c2) erfolgen. Weiterhin kann Schritt d) nach Durchführen des Schritts c') erfolgen.

In Schritt e) wird, wie bereits oben ausgeführt, die Anodenschicht auf die der Elektrolytoberfläche gegenüberliegende Elektrolytschutzschichtoberfläche aufgebracht. Hierfür kann mindestens eine Dispersion eines Anodenmaterials bereitgestellt werden. Die Dispersion des Anodenmaterials kann ebenfalls das inerte Lösungsmittel, wie es bereits beschrieben wurde oder im Folgenden beschrieben wird, umfassen. Das Aufbringen kann ebenfalls mittels des Nassbeschichtungsverfahrens erfolgen, wie es bereits beschrieben wurde oder im Folgenden noch beschrieben wird. Alternativ kann das Anodenmaterial als Folie, insbesondere als Lithiumfolie bereitgestellt werden. Die Folie kann in eine gewünschte Form gestanzt werden und anschließend auf die Elektrolytschutzschicht aufgelegt werden.

Die Anodenschicht kann mindestens ein Material aufweisen ausgewählt aus der Gruppe bestehend aus: Lithium und Lithiumlegierungen, die zusätzlich zu Lithium Elemente wie Mg, Al, Zn, Si, Sn, In, Ag, Pb, Sb oder Bi enthalten können. Die Anode kann zudem auf einem Stromsammler aufgebracht sein, z.B. Kupfer, Edelstahl, Nickel.

Nach oder auch bereits schon während des Durchführens des Schritts e) oder des Schritts f) kann der Schichtaufbau unter Vakuum getrocknet werden. Insbesondere kann ein Trocknungsvorgang von nassen Schichten vor einer Verbindung von einzelnen Teilen oder vor einer weiteren Beschichtung stattfinden. Das Trocknen kann insbesondere über eine Dauer von 2 Stunden bis 24 h, vorzugsweise über eine Dauer von 5 h bis 20 h und besonders bevorzugt über eine Dauer von 12 h erfolgen. Das Trocknen kann bei Raumtemperatur erfolgen. Das Trocknen kann weiterhin unter einer Temperatur von 20 °C bis 250 °C, vorzugsweise von 50 °C bis 200 °C und besonders bevorzugt von 60 °C bis 160 °C erfolgen.

Der Schichtaufbau kann insbesondere die Kathodenschicht, die Elektrolytschicht, die Elektrolytschutzschicht und die Anodenschicht umfassen. Die Kathodenschicht, die Elektrolytschicht, die Elektrolytschutzschicht und die Anodenschicht können, insbesondere in der angegebenen Reihenfolge, übereinander angeordnet sein. Die Kathodenschicht, die Elektrolytschicht, die Elektrolytschutzschicht und die Anodenschicht können eine Einheit bilden. Der Schichtaufbau kann mehrere der Einheiten aufweisen, beispielsweise zwei, drei oder vier oder mehr der Einheiten. Der Schichtaufbau kann darüber hinaus noch weitere Schichten aufweisen. Insbesondere kann der Schichtaufbau elektrisch leitfähige Schichten, jeweils an der Kathodenschicht und der Anodenschicht aufweisen. Die elektrisch leitfähigen Schichten können als Stromkollektoren ausgebildet sein.

In einem weiteren Aspekt der vorliegenden Erfindung wird ein Lithium-Ionen-Festkörperakkumulator vorgeschlagen. Der der Lithium-Ionen-Festkörperakkumulator umfasst mindestens einen Schichtaufbau, hergestellt nach dem Verfahren wie es bereits beschrieben wurde oder im Folgenden noch beschrieben wird. Für weitere Einzelheiten wird daher auf die Beschreibung des Verfahrens verwiesen.

In einem weiteren Aspekt der vorliegenden Erfindung wird eine Verwendung eines Lithium-Ionen-Festkörperakkumulators vorgeschlagen, in der Unterhaltungselektronik, in Elektrofahrzeugen, in Elektroflugzeugen, in Elektroschiffen, in Elektrowerkzeugen, in stationären Speichern, in Backup-Systemen, in Elektrohaushaltsgeräten.

Das vorgeschlagene Verfahren und der vorgeschlagene Lithium-Ionen-Festkörperakkumulator weisen gegenüber bekannten Verfahren und Festkörperakkumulatoren zahlreiche Vorteile auf. Durch die Elektrolytschutzschicht kann eine Dendritenwachstum effizient unterdrückt werden und somit eine Gefahr von Kurzschlüssen effizient vermieden werden. Eine intrinsische Stabilität des sulfidischen Elektrolytmaterials kann erhöht werden. Mittels des vorgeschlagenen Verfahrens kann der Schichtaufbau in großen Maßstäben hergestellt werden. Das Herstellverfahren ist weiterhin grundsätzlich skalierbar und die einzelnen Schichten können mit einstellbaren Schichtdicken hergestellt werden. Weiterhin kann eine Verwendung von Li-In-Legierung oder von Anoden, welche Kompositmaterialien basierend auf Graphit aufweisen, vermieden werden. Dadurch können Herstellkosten reduziert werden. Zudem kann der Lithium-Ionen-Festkörperakkumulator gemäß der vorliegenden Erfindung eine hohe spezifische Energie und eine hohe Energiedichte aufweisen.

Im Einzelnen zeigen:

Figur 1            eine schematische Darstellung eines Ausführungsbeispiels eines erfindungsgemäßen Lithium-Ionen- Festkörperakkumulators;

Figuren 2A bis 2C  eine elektrochemische Messung an einem erfindungsgemäßen Lithium-Ionen-Festkörperakkumulator; und

Figur 3A und 3B    eine schematische Darstellung des Schritts c) des erfindungsgemäßen Herstellungsverfahrens.

Beschreibung der Ausführungsbeispiele

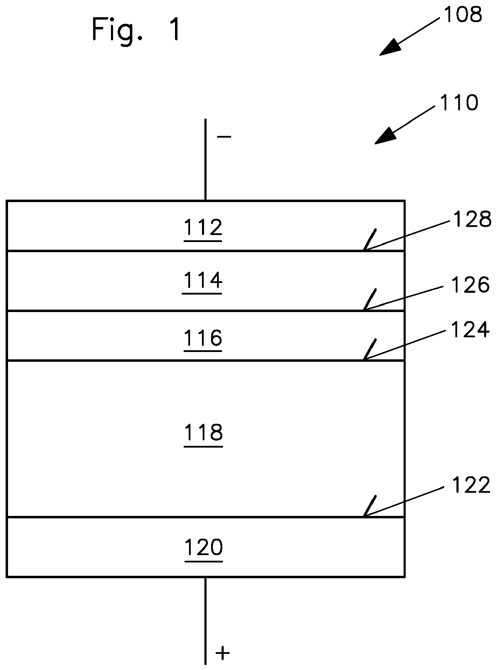

Figur 1 zeigt ein exemplarisches Ausführungsbeispiels eines erfindungsgemäßen Lithium-Ionen-Festkörperakkumulators 108 umfassend einen Schichtaufbau 110 in einer schematischen Darstellung. Der Schichtbau 110 ist herstellbar nach dem Verfahren, welches bereits beschrieben wurde oder im Folgenden noch beschrieben wird.

Der Schichtaufbau 110 umfasst eine Anodenschicht 112. Die Anodenschicht 112 weist elementares Lithium auf. Der Schichtaufbau 110 umfasst weiterhin eine Elektrolytschutzschicht 114, eine Elektrolytschicht 116 und eine Kathodenschicht 118. Weiterhin umfasst der Schichtaufbau 110 ein Substrat 120. Die Elektrolytschutzschicht 114 weist $PEO_{15}LiTFSI$ auf. Die Elektrolytschicht 116 weist 98 Gew% $\beta$-$Li_3PS_4$ und 2 Gew% Polyisobuten auf. Die Kathodenschicht 118 weist 67,2 Gew% $Li[Ni_{0,6}Co_{0,2}Mn_{0,2}]O_2$, 28,8 Gew% $\beta$-$Li_3PS_4$, 2 Gew% Polyisobuten und 2 Gew% Kohlenstofffasern oder alternativ 2 Gew% kugelförmige Kohlenstoffpartikel mit einer durchschnittlichen Größe von 70 nm bis 90 nm (Super C65). Die Kohlenstoffpartikel können eine nanoporöse Netzwerkstruktur aufweisen. auf. Das Substrat 120 kann Aluminium aufweisen.

Die Kathodenschicht 118 kann auf mindestens einer Substratoberfläche des Substrats ausgebildet sein. Die Elektrolytschicht 116 kann auf mindestens einer, der Substratoberfläche 122 gegenüberliegenden Kathodenoberfläche 124 ausgebildet sein. Die Elektrolytschutzschicht 114 kann auf mindestens einer, der Kathodenoberfläche 124 gegenüberliegenden Elektrolytoberfläche 126 ausgebildet sein. Die Anodenschicht 112 kann auf mindestens einer, der Elektrolytoberfläche 126 gegenüberliegenden Elektrolytschutzschichtoberfläche 128 ausgebildet sein.

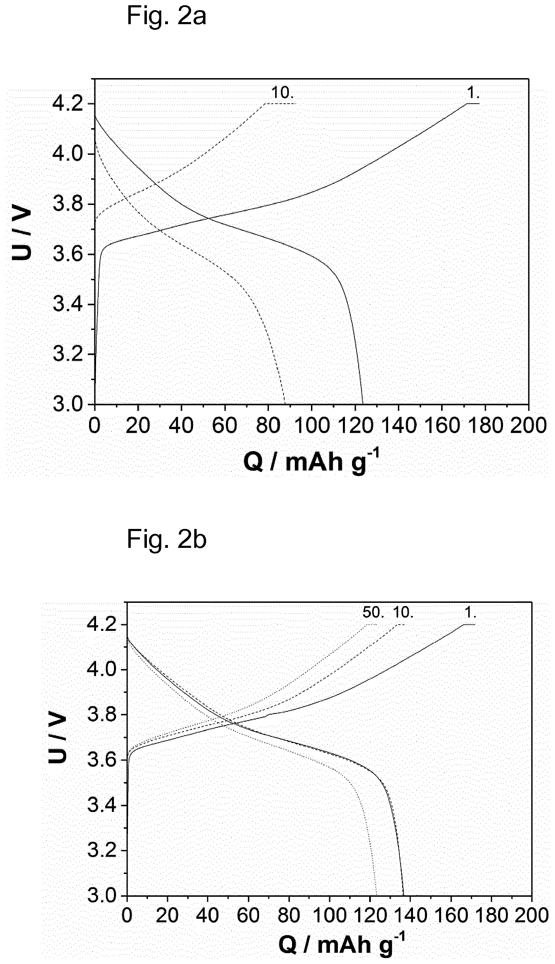

Figuren 2A und 2B zeigen jeweils eine elektrochemische Messung an einem erfindungsgemäßen Lithium-Ionen Festkörperakkumulator 108.

Der Lithium-Ionen-Festkörperakkumulator 108 wurde für die elektrochemische Messung gemäß der Figur 2A durch ein Kaltpressverfahren hergestellt, bei dem der sulfidische Elektrolyt, welcher 98 Gew% $\beta$-$Li_3PS_4$ und 2 Gew% Polyisobuten aufwies, auf die Kathodenschicht 118, welche 67,2 Gew% $Li[Ni_{0,6}Co_{0,2}Mn_{0,2}]O_2$, 28,8 Gew% $\beta$-$Li_3PS_4$, 2 Gew% Polyisobuten und 2 Gew% kugelförmige Kohlenstoffpartikel mit einer durchschnittlichen Größe von 70 nm bis 90 nm (Super C65) aufwies, gepresst wurde. Auf die Elektrolytschicht 116 wurde die Elektrolytschutzschicht 114 aufgelegt und darauf die Anodenschicht 112. Der Schichtaufbau 110 wurde unter einem äußeren Druck bei 60 °C für 10 Stunden gelagert.

Für die elektrochemische Messung wurde ein Strom (C/20) bis 4,2 V und dann eine konstante Spannung von 4,2 V angelegt, bis ein Stromfluss von C/50 erreicht war. Zum Entladen wurde ein Strom von C/20 dem Lithium-Ionen-Festkörperakkumulator 108 entnommen bis eine Spannung von 3,0 V erreicht war. In Figur 2A ist ein Spannungsprofil U mit einer spezifischen Kapazität Q dargestellt. Es sind ein erster Zyklus (durchgezogene Linie) und ein zehnter Zyklus (gestrichelte Linie) dargestellt und es ist eine deutliche Abnahme der spezifischen Kapazität Q zu sehen, sowie eine Erhöhung eines internen Widerstandes, bzw. einer Überspannung. Dabei bezeichnet C/20 einen Ladevorgang bzw. einen Entladevorgang. Der Entladevorgang kann über einen Zeitraum von 5 Stunden bis 50 Stunden stattfinden, vorzugsweise über einen Zeitraum von 10 Stunden bis 30 Stunden, vorzugsweise über einen Zeitraum von 18 Stunden bis 25 Stunden und besonders bevorzugt über einen Zeitraum von 20 Stunden. Dies kann über einen Strom reguliert werden. 1C kann dabei als 150 mA/g definiert sein. Folglich kann C/20 einem Strom von 7,5 mA/g entsprechen, welcher einem System entnommen bzw. zugeführt wird. C/50 kann folglich 3 mA/g entsprechen.

Der Lithium-Ionen-Festkörperakkumulator 108 wurde für die elektrochemische Messung gemäß der Figur 2B durch das Kaltpressverfahren hergestellt, bei dem der sulfidisch Elektrolyten, welcher 98 Gew% $\beta$-$Li_3PS_4$ und 2 Gew% Polyisobuten aufwies, auf die Kathodenschicht 118, welche 67,2 Gew% $Li[Ni_{0,6}Co_{0,2}Mn_{0,2}]O_2$, 28,8 Gew% $\beta$-$Li_3PS_4$, 2 Gew% Polyisobuten und 2 Gew% Kohlenstofffasern aufwies, gepresst wurde. Auf die Elektrolytschicht 116 wurde die Elektrolytschutzschicht 114 aufgelegt und darauf die Anodenschicht 112. Der Schichtaufbau 110 wurde unter einem äußeren Druck bei 60 °C für 10 Stunden gelagert. Die Kohlenstofffasern können insbesondere eine Breite von 20 nm bis 500 nm, vorzugsweise von 50 nm bis 200 nm aufweisen. Weiterhin können die Fasern ein Verhältnis Breite : Länge von 1 : 200 bis 1 : 200 aufweisen. Eine spezifische Oberfläche der Kohlenstofffasern kann 1 $m^2$/g bis 20 $m^2$/g, vorzugsweise 8 $m^2$/g bis 12 $m^2$/g und besonders bevorzugt 10 $m^2$/g bis 11 $m^2$/g betragen

Für die elektrochemische Messung wurde ein Strom (C/20) bis 4,2 V und dann eine konstante Spannung von 4,2V angelegt, bis ein Stromfluss von C/50 erreicht war. Zum Entladen wurde ein Strom von C/20 dem Lithium-Ionen-Festkörperakkumulator 108 entnommen bis eine Spannung von 3,0 V erreicht war. In Figur 2A ist ein Spannungsprofil V mit einer spezifischen Kapazität Q dargestellt. Es sind ein erster Zyklus (durchgezogene Linie), ein zehnter Zyklus (gestrichelte Linie) und eine fünfzigster Zyklus (gepunktete Linie) dargestellt. Es zeigt sich, dass eine Kapazitätsretention deutlich höher ist, wenn Kohlenstofffasern als Leitadditiv verwendet werden, anstelle von Super C65 (siehe Figur 2A).

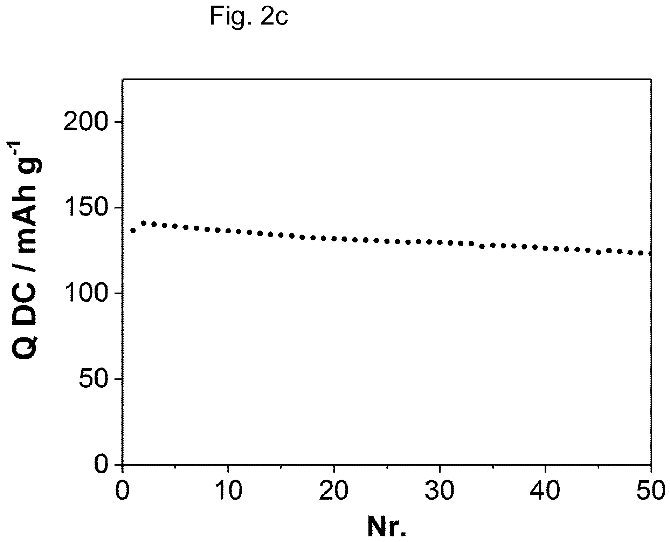

In Figur 2C sind spezifische Entladekapazitäten Q DC in Abhängigkeit einer Zyklenanzahl gezeigt. Der Versuch entspricht dem Versuch gemäß Figur 2B, sodass auf die Beschreibung oben verwiesen werden kann. Es kann auf eine gute Zyklisierbarkeit des Lithium-Ionen-Festkörperakkumulators 108 geschlossen werden.

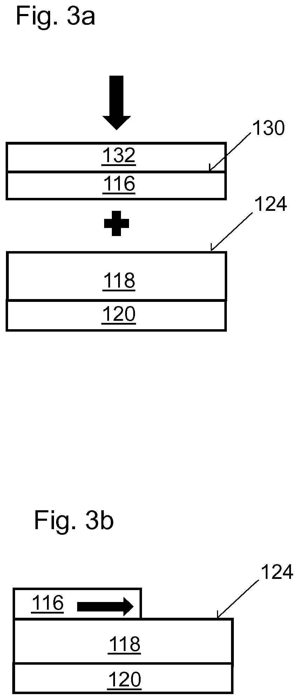

In den Figuren 3A und 3B ist jeweils eine schematische Darstellung des Schritts c) des erfindungsgemäßen Herstellungsverfahrens gezeigt. In Figur 4A wird die Elektrolytschicht 116 in einem separaten Schritt hergestellt, beispielsweise durch Aufbringen einer Dispersion des Elektrolytmaterials auf mindestens einer weiteren Substratoberfläche 130 eines weiteren Substrats 132. Anschließend wird die Elektrolytschicht 116 mit der Kathodenschicht 118 mittels mindestens eines Pressverfahrens verbunden, wie schematisch mit einem Pfeil darstellt. Das Pressverfahren kann insbesondere ein Kaltpressverfahren umfassen. In Figur 4B wird die Elektrolytschicht 116 mittels mindestens eines Nassbeschichtungsverfahrens, insbesondere mittels Rakelns (wie schematisch mit einem Pfeil dargestellt), hergestellt. Hierzu kann eine Dispersion des Elektrolytmaterials bereitgestellt werden und auf die Kathodenoberfläche 124 aufgetragen werden.

Bezugszeichenliste

| | |
|---|---|
| 108 | Lithium-Ionen-Festkörperakkumulator |
| 110 | Schichtaufbau |
| 112 | Anodenschicht |
| 114 | Elektrolytschutzschicht |
| 116 | Elektrolytschicht |
| 118 | Kathodenschicht |
| 120 | Substrat |
| 122 | Substratoberfläche |
| 124 | Kathodenoberfläche |
| 126 | Elektrolytoberfläche |
| 128 | Elektrolytschutzschichtoberfläche |
| 130 | weitere Substratoberfläche |
| 132 | weiteres Substrat |

**Patentansprüche**

1. Verfahren zur Herstellung eines Schichtaufbaus (110) für einen Lithium-Ionen-Festkörperakkumulator (108), wobei das Verfahren die folgenden Schritte umfasst:

   a) Bereitstellen einer Dispersion eines Kathodenkompositmaterials;
   b) Aufbringen der Dispersion des Kathodenkompositmaterials auf ein Substrat (120) derart, dass sich mindestens eine Kathodenschicht (118) auf mindestens einer Substratoberfläche (122) des Substrats (120) ausbildet;
   c) Aufbringen einer sulfidischen Elektrolytschicht (116) auf mindestens eine, der Substratoberfläche (122) gegenüberliegenden Kathodenoberfläche (124) der Kathodenschicht (118);
   d) Aufbringen einer Elektrolytschutzschicht (114) auf mindestens eine, der Kathodenoberfläche (124) gegenüberliegende Elektrolytoberfläche (126); und
   e) Aufbringen einer Anodenschicht (112) auf mindestens eine, der Elektrolytoberfläche (126) gegenüberliegende Elektrolytschutzschichtoberfläche (128), wodurch sich der Schichtaufbau (110) ausbildet, wobei die Anodenschicht (112) elementares Lithium aufweist.

2. Verfahren nach dem vorangehenden Anspruch, das Verfahren ein Bereitstellen einer Dispersion eines sulfidischen Elektrolytmaterials für die Elektrolytschicht (116) umfasst.

3. Verfahren nach dem vorangehenden Anspruch, wobei Schritt c) folgende Teilschritte umfasst:

   c1) Aufbringen der Dispersion des Elektrolytmaterials auf ein weiteres Substrat, derart, dass sich die Elektrolytschicht (116) auf mindestens einer weiteren Substratoberfläche des weiteren Substrats ausbildet;
   c2) Verbinden der Elektrolytschicht (116) mit der Kathodenschicht (118) mittels mindestens eines Pressverfahrens.

4. Verfahren nach dem vorangehenden Anspruch, wobei Schritt c1) mittels mindestens eines Nassbeschichtungsverfahrens durchgeführt wird.

5. Verfahren nach einem der drei vorhergehenden Ansprüche, wobei Schritt c) den folgenden Teilschritt umfasst:
c') Aufbringen der Dispersion des Elektrolytmaterials auf die Kathodenoberfläche (124) der Kathodenschicht (118), derart, dass sich die Elektrolytschicht (116) ausbildet.

6. Verfahren nach einem der vorhergehenden Ansprüche, wobei Schritt b) mittels mindestens eines Nassbeschichtungsverfahrens durchgeführt wird.

7. Verfahren nach einem der vorhergehenden Ansprüche, wobei in Schritt d) die Elektrolytschutzschicht (114) mittels mindestens eines Heißpressverfahrens hergestellt wird.

8. Verfahren nach einem der vorhergehenden Ansprüche, wobei das Kathodenkompostmaterial Kohlenstofffasern umfasst.

9. Verfahren nach einem der vorhergehenden Ansprüche, wobei der Schichtaufbau (110) während oder nach Durchführung des Schritts e) unter Vakuum getrocknet wird.

10. Lithium-Ionen-Festkörperakkumulator (108), wobei der Lithium-Ionen-Festkörperakkumulator (108) mindestens einen Schichtaufbau (110) umfasst, hergestellt nach dem Verfahren nach einem der Ansprüche 1 bis 9.

11. Verwendung eines Lithium-Ionen-Festkörperakkumulators (108) nach dem vorherigen Anspruch in der Unterhaltungselektronik und/oder in Elektrofahrzeugen und/oder in Elektroflugzeugen und/oder in Elektroschiffen und/oder in stationären Speichern und/oder in Backup-Systemen und/oder in Elektrowerkzeugen und/oder in Elektrohaushaltsgeräten.

## Fig. 1

108

110

−

| 112 | 128 |
| 114 | 126 |
| 116 | 124 |
| 118 | |
| | 122 |
| 120 | |

+

Fig. 2a

Fig. 2b

Fig. 2c

Fig. 3a

Fig. 3b

**Europäisches Patentamt**
**European Patent Office**
**Office européen des brevets**

# EUROPÄISCHER RECHERCHENBERICHT

**Nummer der Anmeldung**

EP 19 16 8099

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2015/147659 A1 (KATO KAZUHITO [JP]) 28. Mai 2015 (2015-05-28) * Absätze [0018], [0019], [0032], [0033], [0039], [0040], [0047], [0057], [0059]; Abbildung 1 * ----- | 1-11 | INV. H01M10/052 H01M10/0562 H01M10/0585 |
| A | JP 2016 062709 A (FURUKAWA CO LTD) 25. April 2016 (2016-04-25) * das ganze Dokument * ----- | 1-11 | |
| A | US 2011/123868 A1 (KAWAOKA HIROKAZU [JP] ET AL) 26. Mai 2011 (2011-05-26) * Absätze [0164], [0168], [0178] - [0181] * ----- | 1-11 | |
| A | US 2016/380301 A1 (KOSAKA DAICHI [JP] ET AL) 29. Dezember 2016 (2016-12-29) * Absätze [0090], [0093], [0094], [0099] - [0108], [0124] - [0130] * ----- | 1-11 | |

**RECHERCHIERTE SACHGEBIETE (IPC)**

H01M

Der vorliegende Recherchenbericht wurde für alle Patentansprüche erstellt

| Recherchenort | Abschlußdatum der Recherche | Prüfer |
|---|---|---|
| München | 3. September 2019 | Möller, Claudia |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 19 16 8099

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

03-09-2019

| Im Recherchenbericht angeführtes Patentdokument | Datum der Veröffentlichung | Mitglied(er) der Patentfamilie | Datum der Veröffentlichung |
|---|---|---|---|
| US 2015147659 A1 | 28-05-2015 | CN 104412440 A<br>JP 5930035 B2<br>JP WO2014010043 A1<br>KR 20150018559 A<br>US 2015147659 A1<br>WO 2014010043 A1 | 11-03-2015<br>08-06-2016<br>20-06-2016<br>23-02-2015<br>28-05-2015<br>16-01-2014 |
| JP 2016062709 A | 25-04-2016 | KEINE | |
| US 2011123868 A1 | 26-05-2011 | CN 101911369 A<br>JP WO2010064288 A1<br>KR 20100098543 A<br>US 2011123868 A1<br>WO 2010064288 A1 | 08-12-2010<br>26-04-2012<br>07-09-2010<br>26-05-2011<br>10-06-2010 |
| US 2016380301 A1 | 29-12-2016 | CN 106299443 A<br>JP 6380254 B2<br>JP 2017010816 A<br>US 2016380301 A1 | 04-01-2017<br>29-08-2018<br>12-01-2017<br>29-12-2016 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20170040637 A1
- US 20170162901 A1
- US 20170117551 A1
- DE 102012022607 A1